# EUROPÄISCHE PATENTSCHRIFT

(11) **EP 3 160 668 B1**
(45) Veröffentlichungstag und Bekanntmachung des Hinweises auf die Patenterteilung: **15.08.2018**
(21) Anmeldenummer: 15730763.8
(22) Anmeldetag: 18.06.2015
(51) Int. Cl.: B22D 11/111, C21C 7/076, C21C 7/00

(54) **GIESSPULVER, GIESSSCHLACKE UND VERFAHREN ZUM GIESSEN VON STAHL**
CASTING POWDER, CASTING SLAG AND METHOD FOR CASTING STEEL
POUDRE DE COULÉE, SCORIES DE COULÉE ET PROCÉDÉ SERVANT À COULER DE L'ACIER

(30) Priorität: 24.06.2014 DE 102014108843
(43) Veröffentlichungstag der Anmeldung: 03.05.2017
(73) Patentinhaber: ThyssenKrupp Steel Europe AG, 47166 Duisburg (DE); thyssenkrupp AG, 45143 Essen (DE)
(72) Erfinder: BALICHEV, Evgeny, 40235 Düsseldorf (DE); DRESLER, Matthias, 47495 Rheinberg (DE); RUDNIZKI, Jenny, 40239 Düsseldorf (DE)
(74) Vertreter: thyssenkrupp Intellectual Property GmbH
(86) Internationale Anmeldenummer: PCT/EP2015/063749
(87) Internationale Veröffentlichungsnummer: WO 2015/197470

(56) Entgegenhaltungen:
- WO-A1-2004/054742
- WO-A1-2007/148939
- WO-A1-2011/090218
- DE-A1- 10 105 620
- JP-A- S57 184 563

## Beschreibung

### Stand der Technik

Die vorliegende Erfindung geht aus von einem Gießpulver, einer Gießschlacke sowie einem Verfahren zum Gießen von Stahl.

Gießpulver wird beim Gießen von Stahl ständig auf die Oberfläche von geschmolzenem Stahl gegeben, der sich in einer Gussform, häufig auch als Kokille bezeichnet, befindet. Hierbei wird es durch die Hitze geschmolzen und bildet eine Schlackenschicht, die laufend in den Spalt zwischen der Gussform und der verfestigten Schale des Stahls fließt und somit verbraucht wird. Die wichtigsten Aufgaben des Gießpulvers bzw. der daraus resultierenden Schlacke sind die Schmierung zwischen der Gussform und der sich verfestigenden Schale, die Steuerung der Wärmeabfuhr des erstarrenden Stahls, die Aufnahme von Desoxidationsprodukten, die Verhinderung der Re-Oxidation und die Wärmeisolierung des geschmolzenen Stahls.

Typische Gießpulver für das Stranggießen von Stählen sind auf Kalziumsilikatbasis aufgebaut und enthalten üblicherweise eine beträchtliche Menge an Siliziumdioxid (SiO₂) sowie andere leicht zu reduzierenden Komponenten wie z. B. Manganoxid (MnO) und Eisenoxid (FeO), so dass während des Gießens von aluminiumlegierten Stählen der Aluminiumoxidgehalt in der Gießschlacke aufgrund einer chemischen Reaktion zwischen dem Aluminium (Al) des Stahls und dem Siliziumdioxid sowie Mangan- und Eisenoxid der Gießschlacke stark zunimmt:

4Al + 3SiO₂ ↔ 2Al₂O₃ + 3Si

2Al + 3MnO ↔ Al₂O₃ + 3Mn

2Al + 3FeO ↔ Al₂O₃ + 3Fe.

Die typische Aufnahme von Aluminiumoxid (Al₂O₃, auch als Tonerde bezeichnet) beim Vergießen von Al-beruhigten Stählen beträgt ca. 2-4 Gew.-%. Mit höherem Aluminiumgehalt im Stahl steigt die Al₂O₃-Aufnahme in der Gießschlacke. So steigt beispielsweise bei der Herstellung von TRIP-Stählen mit einem Al-Gehalt von ca. 1,2-1,5 Gew.-% die Al₂O₃-Konzentration in der Gießschlacke auf ca. 35-40 Gew.-%.

Der SiO₂-Gehalt der Gießschlacke verringert sich entsprechend, da Siliziumdioxid durch Aluminium reduziert wird. Generell ändern sich hierdurch die Eigenschaften der Gießschlacke. Beispielsweise erhöhen sich aufgrund der Aufnahme von Al₂O₃ und der damit verbundenen Abnahme des Anteils von SiO₂ die Basizität, die Viskosität und die Kristallisationsneigung der Gießschlacke, was ein Nachlassen ihrer Schmierwirkung zur Folge hat. Generell weisen amorph erstarrende Gießschlacken bessere Schmierwirkungen auf als kristallin erstarrende Gießschlacken. Im Stand der Technik werden üblicherweise Schlackensysteme basierend auf Kalziumsilikaten verwendet. Diese Schlackensysteme, welche auf Kalziumsilikaten basieren, erstarren typischerweise überwiegend amorph, solange der Aluminiumanteil des Stahls nicht zu hoch ist, d.h. insbesondere < 1 Gew.-% beträgt. Bei höheren Al-Gehalten in der Schmelze erstarren Schlackensysteme auf Kalziumsilikatbasis jedoch überwiegend kristallin.

Beim Gießen von aluminiumlegierten Stählen, die gleichzeitig einen hohen Mangangehalt aufweisen (z.B. mit Mn-Gehalten ≥ 15 Gew.-% und Al-Gehalten ≥ 1 Gew.-%) wird der Gießvorgang zusätzlich dadurch erschwert, dass die Liquidustemperatur dieser Stähle aufgrund des hohen Mn-Gehaltes ca. 100°C niedriger liegt als z.B. die Liquidustemperatur der TRIP-Stähle. Das bedeutet, dass die Schmelz- und Kristallisationstemperatur der Gießschlacke für hoch Al-Mn-haltige Stähle ebenfalls ca. 100°C niedriger liegen muss als bei anderen hoch Al-haltigen Stählen. Andernfalls kann die Gießschlacke in der unteren Hälfte der Gussform vollständig kristallisieren und deren Schmierwirkung dadurch aufgehoben werden.

Aufgrund der vorstehend beschriebenen Änderungen der Eigenschaften der Gießschlacke während des Gießens eines Al-legierten Stahls kann diese ihre Aufgaben häufig nur noch unzureichend oder überhaupt nicht mehr erfüllen. Insbesondere Stähle mit einem hohen Gehalt an Aluminium bzw. an Aluminium und Mangan können daher mit den aus dem Stand der Technik bekannten Gießpulvern nicht prozesssicher hergestellt werden.

Aus der WO2011/090218 sind Gießpulverzusammensetzungen für das Gießen von Stahl bekannt, die sich jedoch aufgrund ihres hohen SiO₂-Gehalts von 15-30 Gew.-% insbesondere nicht für den Einsatz beim Gießen von Stahl mit einem hohen Gehalt an Aluminium eignen. Entsprechendes gilt auch für die aus der WO2007/148939 bekannten Gießpulver und deren Verwendung beim Gießen von Stahl. Die JP 57184563 A offenbart ein Pulver zur Beschichtung von geschmolzenem Metall mit einem vergleichsweise geringen Gehalt an SiO₂. Die aus diesem Pulver erhaltene Schlacke kann jedoch infolge ihrer chemischen Zusammensetzung die notwendigen Funktionseigenschaften, z.B. Schmierwirkung und Wärmeübertragung, besonders für hohe Al-Mn-Stähle nicht gewährleisten. Erfahrungsgemäß besitzen Schlacken, die aus in JP 57184563 offenbarten Gießpulvern resultieren, zu hohe Kristallisationstemperaturen sowie zu hohe Viskositäten im prozessrelevanten Bereich. Aus der Patentanmeldung WO2004/054742 ist ein Abdeckmittel einer Schmelze in einem offenen metallurgischen Gefäß zur Bildung einer Topschlacke bekannt, das auf der Oberfläche des Gefäßes bleibt und isolierende Wirkung hat, welches im Wesentlichen aus porosiertem Granulat und im Wesentlichen zu mindestens 85% aus einem Calziumaluminat besteht. Auch diese Veröffentlichung beinhaltet keine Schmierwirkung für die Beförderung des Stranges aus der Gießkokille und keine Steuerung der Wärmeübertragung zwischen dem Strang und der Kokillenwand. Die DE 101 05 620 offenbart ein Verfahren, bei dem das schlackebildende Material als Abdeckkörper auf der Schmelze schwimmt und dadurch aufschmilzt und dieser Abdeckkörper, der durch Verpressen von schlackebildendem, pulvrigem (Gießpulver) oder körnigem Material hergestellt ist und durch ein mit einem flüssigen oder pastösen Bindemittel gemischten schlackebildenden Material durch Vergießen hergestellt ist. In der DE 101 05 620 ist Calcium-Aluminat als im Stand der Technik üblicher Schlackebildner verwendet (vgl. D2; [0006] und [0026]), bei dem durch Zugabe von Kalk oder Tonerde das Ca/Al-Verhältnis (Anspruch 10) variiert wird. Auch hier wird die Schlackeschicht in einem Zwischengefäß, "Tundish", beschrieben, nicht aber die Schmierung für die Beförderung des Stranges in der Gießkokille und die Wärmeübertragung zwischen dem Strang und der Kokillenwand.

### Offenbarung der Erfindung

Es ist daher eine Aufgabe der vorliegenden Erfindung, ein Gießpulver sowie eine Gießschlacke zur Verfügung zu stellen, welche die Herstellung von Stählen mit hohen Gehalten an Aluminium von ≥ 1 Gew.-% und ggf. hohen Gehalten an Mangan von ≥ 15 Gew.-% sowie ggf. Titan von ≥ 0,2 Gew.-% ermöglicht. Eine weitere Aufgabe der vorliegenden Erfindung besteht darin, ein Verfahren zum Gießen von Stahl, insbesondere ein Verfahren zum Stranggießen von Stahl, unter Verwendung dieses Gießpulvers bzw. der Gießschlacke zur Verfügung zu stellen.

Diese Aufgabe wird durch den Gegenstand der Beschreibung und der Patentansprüche gelöst.

In einem ersten Aspekt betrifft die Erfindung eine Gießschlacke umfassend die Komponenten:
30-50 Gew.-% CaO;
20-45 Gew.-% Al₂O₃;
7-15 Gew.-% F⁻(Fluor-Ionen);
5-15 Gew.-% Na₂O;
3-6,5 Gew.-% SiO₂;
2-5% Gew.-% Li₂O.

Die Gießschlacke resultiert aus einem Gießpulver, welches die Komponenten CaO und Al₂O₃ im Wesentlichen in Form von vorgeschmolzenem Kalziumaluminat enthält. Im Wesentlichen vorgeschmolzen bedeutet im Sinne der vorliegenden Erfindung, dass das Kalziumaluminat > 50 %, bevorzugt > 60 %, besonders bevorzugt > 70 %, ganz besonders bevorzugt > 80 %, am meisten bevorzugt > 90 % bis zu 100 % vorgeschmolzen ist.

Darüber hinaus enthält das Gießpulver eine fluoridhaltige Komponente, vorzugsweise CaF₂, SiO₂, ggf. auch in Form von CaSiO₃, Na₂O, ggf. auch in Form von Na₂CO₃, Li₂O, ggf. auch in Form von Li₂CO₃ sowie ggf. zusätzlich Al₂O₃.

Das Gießpulver kann dabei auch flüchtige Bestandteile enthalten, welche beispielsweise beim Erwärmen ausgasen, wie z.B. Wasser oder CO₂.

In einem weiteren Aspekt betrifft die vorliegende Erfindung daher ein Gießpulver, umfassend die folgenden Komponenten, berechnet ohne flüchtige Bestandteile:
40-60 Gew.-% vorgeschmolzenes Kalziumaluminat;
10-30 Gew.-% fluoridhaltige Komponente, vorzugsweise CaF₂;
3-6,5 Gew.-% SiO₂;
5-15 Gew.-% Na₂O;
2-5,5 Gew.-% Li₂O;
≤ 10,5 Gew.-% Al₂O₃;
≤ 15 Gew.-% Kohlenstoff.

Wichtig für die Erreichung der gewünschten Gießschlackenzusammensetzung und der Erzielung der erforderlichen Gießschlackeneigenschaften, wie beispielsweise ihrer Viskosität, ist, dass das Verhältnis von CaO zu Al₂O₃ im vorgeschmolzenen Kalziumaluminat im Bereich von ca. 40/60 (2:3) bis ca. 50/50 (1:1) beträgt. Das Verhältnis von CaO zu Al₂O₃ im vorgeschmolzenen Kalziumaluminat sollte nicht deutlich weniger als 0,6 oder deutlich mehr als 1,0 betragen, weil ansonsten die Liquidustemperatur des Kalziumaluminats zu hoch wird und das Kalziumaluminat als Bestandteil des Gießpulvers aufschmilzt und somit das Gießpulver nur unzureichend aufschmilzt. Bevorzugt beträgt das Verhältnis 0,6 bis 1,1, besonders bevorzugt 0,65 bis 1,05, ganz besonders bevorzugt 0,7 bis 1 oder 0,7 bis 0,9.

Weiterhin ist wichtig, dass das Kalziumaluminat in vorgeschmolzener Form im Gießpulver vorliegt. Bei den bevorzugten Zusammensetzungen des Kalziumaluminats handelt es sich um nahezu eutektische Zusammensetzungen, die ein schnelleres Aufschmelzen des Gießpulvers sowie eine niedrigere Kristallisationsneigung der aus diesem Gießpulver erhaltenen Gießschlacken zur Folge haben, was die Prozesssicherheit erhöht. Ein weiterer Grund für die Verwendung vorgeschmolzenen Kalziumaluminats liegt in der leichteren Handhabung des CaO-Zusatzes. Ein Einsatz von Branntkalk (CaO) erschwert die Herstellung eines Gießpulvers dadurch, dass der Branntkalk sehr hygroskopisch ist und durch eine Feuchtigkeitsaufnahme sein Gewicht ändern kann. Dies kann zur Verschiebung des CaO/Al₂O₃-Verhältnisses in der Gießpulver- bzw. Gießschlackenzusammensetzung führen und deren Eigenschaften verschlechtern.

Silizium trägt zur Stabilisierung des amorphen Zustands bei und fördert die amorphe Erstarrung der Gießschlacke. Der SiO₂-Anteil im Gießpulver sollte nicht weniger als 3 Gew.-% betragen, weil ansonsten der amorphe Anteil der resultierenden Gießschlacke weniger als 60 % beträgt. Der SiO₂-Anteil im Gießpulver sollte nicht mehr als 6,5 Gew.-% betragen, weil ansonsten der zusätzliche Anteil SiO₂ mit dem in der Stahlschmelze enthaltenen Aluminium reagieren würde. Der freie Sauerstoff würde sich an Aluminium binden, so dass die Schlacke zusätzlich Al₂O₃ aufnehmen würde. Das Schlackensystem wäre chemisch nicht mehr stabil, d.h. das angestrebte optimale Verhältnis von CaO zu Al₂O₃ wäre nicht mehr gegeben.

Die fluoridhaltigen Komponenten, Na₂O und Li₂O im Gießpulver beeinflussen die Erstarrungstemperatur sowie das Kristallisationsverhalten der daraus resultierenden Gießschlacke. Der Anteil an einer fluoridhaltigen Komponente sollte nicht weniger als 10 Gew.-%, der Anteil an Na₂O nicht weniger als 5 Gew.-% und der Anteil an Li₂O nicht weniger als 2 Gew.-% betragen, weil ansonsten die Erstarrungstemperatur ansteigen und der kristallin erstarrende Schlackenanteil zunehmen würde. Der Einfluss von Li₂O ist hierbei stärker als der von Na₂O, weshalb Li₂O nur in geringen Mengen beigegeben werden muss. Allerdings ist Li₂O im Vergleich zu Na₂O sehr teuer, weshalb aus Kostengründen die Wirkung von Li₂O so weit wie möglich mit Na₂O kompensiert wird.

Der Anteil einer fluoridhaltigen Komponente sollte nicht mehr als 30 Gew.-%, der Anteil an Na₂O nicht mehr als 15 Gew.-% und der Anteil an Li₂O nicht mehr als 5,5 Gew.-% betragen, weil ansonsten die Erstarrungstemperatur zu niedrig und die Gießschlacke zu dünnflüssig wäre. Dünnflüssige Gießschlacke fließt an der Stahloberfläche ab, wodurch die Schmierwirkung der Schlacke nicht mehr über die gesamte Kontaktfläche zwischen Stahlstrangschale und Kokillenwand gegeben ist. Dies kann zum Aufreißen der noch dünnen Strangschale und Produktionsausfällen durch Strangdurchbrüche führen. Darüber hinaus führt ein unvollständig ausgebildeter Schlackenfilm zu ungleichmäßigen Wärmeabfuhrbedingungen, welche wiederum zu thermischen Spannungen in der Strangschale und damit eventuell ebenfalls zu Strangdurchbrüchen führen.

Al₂O₃ kann dem Gießpulver zusätzlich zu dem im vorgeschmolzenen Kalziumaluminat gebundenen Al₂O₃ zugegeben werden. Das zusätzliche Al₂O₃ wird dem Gießpulver zugegeben, um bei höheren Gehalten an kalziumhaltigen Komponenten, insbesondere von CaF₂, das Verhältnis von CaO zu Al₂O₃ im angestrebten optimalen Bereich von ca. 0,6 bis ca. 1,0 zu halten, da Zusätze von kalziumhaltigen Komponenten, insbesondere von CaF₂, das über das Kalziumaluminat eingebrachte Ausgangsverhältnis von CaO zu Al₂O₃ verschieben. Der Anteil an zusätzlichem Al₂O₃ sollte 10,5 Gew.-% nicht überschreiten, um das Verhältnis von CaO zu Al₂O₃ nicht zu stark zu Gunsten von Al₂O₃ zu verschieben, was sich wiederum negativ auf die Bildung und die Funktionalität der Gießschlacke auswirken würde. Bei Zugabe von zusätzlichem Al₂O₃ hat sich ein Verhältnis von CaO zu Al₂O₃ von 0,7 bis 0,9 im Gießpulver als besonders vorteilhaft erwiesen.

Kohlenstoff kann dem Gießpulver zugegeben werden, um das Aufschmelzen des Gießpulvers zu beschleunigen. Der Kohlenstoffgehalt im Gießpulver sollte nicht mehr als 15 Gew.-% betragen, um eine Aufkohlung der Stahlschmelze zu vermeiden. Bevorzugt kann der Kohlenstoff in einer Menge von 4-10 Gew.-%, besonders bevorzugt 5-7 Gew.-%, im Gießpulver enthalten sein. Der Kohlenstoff kann dabei in üblicher, dem Fachmann bekannter Form eingesetzt werden, beispielsweise als Ruß, Graphit oder Koksstaub.

Der Fachmann versteht, dass das erfindungsgemäße Gießpulver nicht streng pulverförmig sein muss, sondern zumindest teilweise oder sogar vollständig auch in anderer Form vorliegen kann, beispielsweise als Granulat oder in Form von Hohlkugeln, ggf. sogar in flüssiger Form.

Die erfindungsgemäße Gießschlacke soll beim Erstarren eine im Wesentlichen amorphe Struktur aufweisen, d.h. der amorphe Anteil in der Gießschlacke soll mindestens 60 %, bevorzugt mindestens 70 %, noch weiter bevorzugt mindestens 80 % betragen. Ganz besonders gute Eigenschaften weisen Schlacken mit einem amorphen Anteil von mindestens 90 % auf. Der hohe amorphe Anteil ist wichtig zur Einhaltung guter Schmiereigenschaften und einer gleichmäßigen Wärmeleitung.

Die erfindungsgemäße Gießschlacke weist insbesondere Vorteile bei der Herstellung von Stählen mit Al-Gehalten ≥ 1 Gew.-% auf, weil diese Gießschlacken auch bei Stählen mit Al-Gehalten ≥ 1 Gew.-% chemisch stabil sind. Chemisch stabil bedeutet, dass die Schlacke im Gießverlauf nicht mit dem in der Stahlschmelze gelösten Aluminium reagiert und ihre chemische Zusammensetzung nahezu unverändert bleibt. Dies erhöht die Prozesssicherheit und Produktqualität.

Auch bei Stählen, die zusätzlich einen hohen Mangangehalt beispielsweise von ≥ 15 Gew.-% aufweisen, kann unter Verwendung der erfindungsgemäßen Gießschlacke eine hohe Prozesssicherheit erreicht werden. Stähle mit Mn-Gehalten ≥ 15 Gew.-% haben eine deutlich niedrigere Liquidustemperatur als Stähle mit geringeren Mn-Gehalten. Typische Liquidustemperaturen für Stähle mit Mn-Gehalten ≥ 15 Gew.-% sind 1400 - 1430 °C.

Stähle mit einem Al-Gehalt ≥ 1 Gew.-% und zusätzlichem hohen Titan-Gehalt von beispielsweise ≥ 0,2 Gew.-% weisen im Prozess die Schwierigkeit auf, dass nicht nur Al als chemisch aktives Element, sondern auch Ti als chemisch aktives Element in höheren Anteilen vorliegt. Gießschlacken, die zur Herstellung solcher Stähle verwendet werden, müssen eine gute chemische Stabilität gegenüber Al und Ti aufweisen. Dies ist bei den erfindungsgemäßen Gießschlacken der Fall.

Titan ist ein chemisch aktives Element und kann Si oder Mn aus der Schlacke herauslösen, indem es den an Si oder Mn gebundenen Sauerstoff an sich bindet. Bei erhöhtem Titandioxidgehalt können Titan-Kalzium-Oxid-Verbindungen (TiO₂-CaO) entstehen, die eine kristalline Erstarrung der Gießschlacke fördern. Um diese Problematik zu vermeiden, wird in den erfindungsgemäßen Gießpulvern vorteilhafterweise auf den Zusatz entsprechender Bestandteile, wie z.B. Manganoxid und Eisenoxid, verzichtet. Diese Komponenten werden daher nicht gezielt zugesetzt, können aber als unerwünschte Begleitelemente im erfindungsgemäßen Gießpulver und damit in der erfindungsgemäßen Gießschlacke enthalten sein.

Die erfindungsgemäße Gießschlackenzusammensetzung kann weitere Alkalimetalloxide, Erdalkalimetalloxide oder Übergangsmetalloxide enthalten. Die erfindungsgemäße Gießschlackenzusammensetzung kann daher eine oder mehrere der folgenden Komponenten umfassen:
≤ 5,0 Gew.-% TiO₂;
≤ 5,0 Gew.-% MgO;
≤ 3,0 Gew.-% MnO;
≤ 2,0 Gew.-% FeO.

Die zugehörige bevorzugte Gießpulverzusammensetzung enthält daher zusätzlich eine oder mehrere der folgenden Komponenten:
≤ 5,0 Gew.-% TiO₂;
≤ 5,0 Gew.-% MgO;
≤ 3,0 Gew.-% MnO;
≤ 1,0 Gew.-% Fe₂O₃;
≤ 1,0 Gew.-% FeO.

TiO₂ kann dem erfindungsgemäßen Gießpulver zugegeben werden. Der Anteil an TiO₂ im Gießpulver sollte aber nicht mehr als 5,0 Gew.-% betragen, weil der darüber hinausgehende Anteil an TiO₂ mit dem in der Stahlschmelze enthaltenen Aluminium reagieren würde. Der freie Sauerstoff würde sich an Aluminium binden, so dass die Schlacke zusätzlich Al₂O₃ aufnehmen würde. Das Schlackensystem wäre chemisch nicht mehr stabil, d.h. das angestrebte optimale Verhältnis von CaO zu Al₂O₃ wäre nicht mehr gegeben. Darüber hinaus könnte bei TiO₂-Anteilen von > 5 Gew.-% Titan als Element in die Stahlschmelze übergehen und deren chemische Zusammensetzung ungewünscht verändern.

MgO, MnO, Fe₂O₃, FeO können im Gießpulver als Begleitelemente enthalten sein, werden aber nicht gezielt zum Einstellen der Gießschlackeneigenschaften beigegeben.

In einer bevorzugten Ausführungsform umfasst die erfindungsgemäße Gießschlacke die folgenden Komponenten:
33-48 Gew.-%
23-43 Gew.-% Al₂O₃;
7-13 Gew.-% F⁻(Fluor-Ionen);
3-6,5 Gew.-% SiO_{2;}
7-12 Gew.-% Na₂O;
2-5 Gew.-% Li₂O;
≤ 3 Gew.-% TiO₂.
≤ 1,5 Gew.-% MgO;
≤ 1,0 Gew.-% MnO;
≤ 1 Gew.-% FeO

Die zugehörige bevorzugte Gießpulverzusammensetzung umfasst die Komponenten, berechnet ohne flüchtige Bestandteile:
40-60 Gew.-% vorgeschmolzenes Kalziumaluminat;
15-30 Gew.-% fluoridhaltige Komponente, vorzugsweise CaF₂;
3-6 Gew.-% SiO₂;
7-12 Gew.-% Na₂O;
2-5,5 Gew.-% Li₂O;
≤ 10,5 Gew.-% Al₂O₃;
≤ 15 Gew.-% Kohlenstoff;
≤ 3,0 Gew.-% TiO₂;
≤ 1,0 Gew.-% MgO;
≤ 1,0 Gew.-% MnO;
≤ 1,0 Gew.-% Fe₂O₃;
≤ 1,0 Gew.-% FeO.

Die für die vorstehend angegebenen Zusammensetzungen der Gießschlacken und Gießpulver angegebenen Gewichtsangaben beziehen sich jeweils auf die Summe der Komponenten der Gießschlackenzusammensetzung bzw. der Gießpulverzusammensetzungen.

Die Fluor-Ionen bzw. fluoridhaltige Komponenten in den erfindungsgemäßen Gießschlacken und Gießpulverzusammensetzungen können jeweils in Form üblicher Fluoride, beispielsweise Fluoride der Alkali-, Erdalkali-, bzw. Übergangsmetalle zugegeben werden, insbesondere in Form eines Fluorids ausgewählt aus der Gruppe bestehend aus CaF₂, MgF₂, NaF, LiF und Mischungen aus zwei oder mehr dieser Fluoride.

In jeweils besonders bevorzugten Ausführungsformen der erfindungsgemäßen Gießschlacken und Gießpulvern stammt der Anteil der Fluor-Ionen bzw. fluoridhaltigen Komponente aus CaF₂ (auch als Flussspat bezeichnet).

Die Zusammensetzung eines Gießpulvers enthaltend die Komponenten Kalziumaluminat (CaO-Al₂O₃) und CaF₂ hat sich als besonders vorteilhaft herausgestellt, um die Konstanz der Eigenschaften der daraus erhaltenen Gießschlacke und somit insbesondere auch die Prozesssicherheit der Herstellung von Al-legierten Stählen zu verbessern. Die Komponenten dieser ternären CaO-Al₂O₃-CaF₂ Mischung gehen keine Reaktion mit dem im Stahl enthaltenen Aluminium ein, so dass die chemische Stabilität des Gießpulvers sowie konstante Eigenschaften der daraus erhaltenen Gießschlacke während des Gießens gewährleistet sind.

Die genaue Zusammensetzung des zum Einsatz kommenden Gießpulvers kann variieren und so weiter an die vorliegenden Bedingungen angepasst werden, beispielsweise an die Zusammensetzung des Stahls oder an die Art des Gießverfahrens.

Weiterhin besteht grundsätzlich die Möglichkeit, Bortrioxid (B₂O₃) als Gießpulverzusatz zu verwenden. Das im Pulver bzw. in der Schlacke befindliche Bortrioxid kann durch das im Stahl befindliche Aluminium gemäß der nachfolgenden Reaktionsgleichung reduziert werden:

2Al + B₂O₃ ↔ Al₂O₃ + 2B

Das reduzierte Bor kann als unerwünschtes Begleitelement in die Schmelze eingetragen werden. Um dies zu verhindern, wird in den hierin beschriebenen Gießpulver- und Gießschlackenzusammensetzungen vorzugsweise auf Bor verzichtet.

Um die Funktionseigenschaften, z.B. Schmiereigenschaften im Gießspalt zwischen Stahl und Kokille zu optimieren, kann die Zusammensetzung der Gießschlacken an die Liquidustemperatur der zu vergießenden Stahlgüte angepasst werden. Dies erfolgt beispielsweise durch Einstellen definierter Gehalte im Gießpulver an Flussmitteln, wie Natriumoxid- (Na₂O) und/oder Lithiumoxid- (Li₂O) und/oder des Gehaltes an fluoridhaltigen Komponenten.

Beispielsweise können beim Vergießen von Stahlgüten mit hoher Liquidustemperatur von z.B. 1500-1530°C in der Gießschlacke ein Na₂O-Gehalt von 5-11 Gew.-%, ein Li₂O-Gehalt von ca. 2-3 Gew.-% und ein F⁻-Gehalt von 8-10,5 Gew.-% eingestellt werden, wobei die Summe aus Na₂O, Li₂O und F⁻ vorzugsweise < 25 Gew.-% beträgt. Die Summe aus Na₂O, Li₂O und F⁻ sollte < 25 Gew.-% sein, um zu vermeiden, dass die Schlacke zu dünnflüssig wird.

In einem weiteren Aspekt betrifft die vorliegende Erfindung daher eine Gießschlackenzusammensetzung für Stähle mit einer hohen Liquidustemperatur, welche die folgenden Komponenten umfasst:
30-50 Gew.-%
20-45 Gew.-% Al₂O₃;
8-10,5 Gew.-% F⁻(Fluor-Ionen);
3-6,5 Gew.-% SiO_{2;}
5-11 Gew.-% Na₂O;
2-3 Gew.-% Li₂O;
≤ 3 Gew.-% TiO₂;
≤ 5 Gew.-% MgO;
≤ 3 Gew.-% MnO;
≤ 2 Gew.-% FeO.

Die zugehörige Gießpulverzusammensetzung umfasst, berechnet ohne flüchtige Bestandteile:
40-60 Gew.-% vorgeschmolzenes Kalziumaluminat;
10-30 Gew.-% fluoridhaltige Komponente, vorzugsweise in Form von CaF₂;
3-6,5 Gew.-% SiO₂;
5-11 Gew.-% Na₂O;
2-3 Gew.-% Li₂O;
≤ 10,5 Gew.-% Al₂O₃;
≤ 15 Gew.-% Kohlenstoff;
≤ 3,0 Gew.-% TiO₂;
≤ 5,0 Gew.-% MgO;
≤ 3,0 Gew.-% MnO;
≤ 1,0 Gew.-% Fe₂O₃;
≤ 1,0 Gew.-% FeO.

In einer bevorzugten Ausführungsform umfasst die Gießschlackenzusammensetzung für Stähle mit einer hohen Liquidustemperatur die folgenden Komponenten:
33-48 Gew.-%
23-43 Gew.-% Al₂O₃;
8-10,5 Gew. F⁻(Fluor-Ionen);
3-5 Gew.-% SiO_{2;}
5-11 Gew.-% Na₂O;
2-3 Gew.-% Li₂O;
≤ 3 Gew.-% TiO₂.
≤ 1,5 Gew.-% MgO;
≤ 1,0 Gew.-% MnO;
≤ 1,0 Gew.-% FeO.

Die zugehörige bevorzugte Gießpulverzusammensetzung enthält, berechnet ohne flüchtige Bestandteile:
40-60 Gew.-% vorgeschmolzenes Kalziumaluminat;
10-25 Gew.-% fluoridhaltige Komponente, vorzugsweise in Form von CaF₂;
3-5 Gew.-% SiO₂;
5-11 Gew.-% Na₂O;
2-3 Gew.-% Li₂O;
≤ 8 Gew.-% Al₂O₃;
≤ 5 Gew.-% Kohlenstoff;
≤ 3,0 Gew.-% TiO₂;
≤ 1,0 Gew.-% MgO;
≤ 1,0 Gew.-% MnO;
≤ 1,0 Gew.-% Fe₂O₃;
≤ 1,0 Gew.-% FeO.

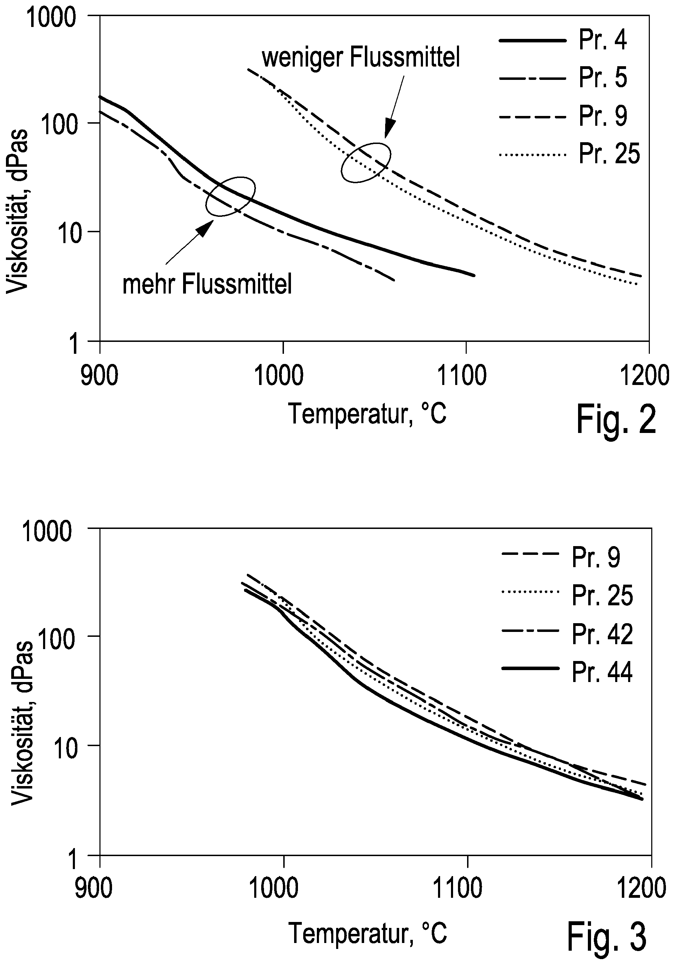

Für Stähle mit niedriger Liquidustemperatur, z.B. 1400-1430°C kommt insbesondere eine Gießschlacke mit einem Na₂O-Gehalt von 9-15 Gew.-%, einem Li₂O-Gehalt von 4-5 Gew.-% und einem F⁻-Gehalt von 12,5-15 Gew.-% in Betracht, wobei die Summe aus Na₂O, Li₂O und F⁻ ≥ 25 Gew.-% beträgt. Hier ist die gemessene Viskosität für die Fälle mit höheren Flussmittelgehalten um ca. 100°C zu den niedrigeren Temperaturen verschoben (Fig. 2).

In einem weiteren Aspekt betrifft die vorliegende Erfindung daher eine Gießschlackenzusammensetzung für Stähle mit einer niedrigen Liquidustemperatur, welche die folgenden Komponenten enthält:
30-50 Gew.-%
20-45 Gew.-% Al₂O₃;
12,5-15 Gew.-% F⁻(Fluor-Ionen);
3-6,5 Gew.-% SiO_{2;}
9-15 Gew.-% Na₂O;
4-5 Gew.-% Li₂O;
≤ 3 Gew.-% TiO₂;
≤ 5 Gew.-% MgO;
≤ 3 Gew.-% MnO;
≤ 2 Gew.-% FeO.

Das zugehörige Gießpulver weist eine Zusammensetzung auf, die berechnet ohne flüchtige Bestandteile folgende Komponenten umfasst:
40-60 Gew.-% vorgeschmolzenes Kalziumaluminat;
15-30 Gew.-% fluoridhaltige Komponente, vorzugsweise in Form von CaF₂;
3-6,5 Gew.-% SiO₂;
9-15 Gew.-% Na₂O;
3-5 Gew.-% Li₂O;
≤ 10 Gew.-% Al₂O₃;
≤ 15 Gew.-% Kohlenstoff;
≤ 3 Gew.-% TiO₂;
≤ 5 Gew.-% MgO;
≤ 3 Gew.-% MnO;
≤ 1 Gew.-% Fe₂O₃;
≤ 1 Gew.-% FeO.

In einer bevorzugten Ausführungsform umfasst die erfindungsgemäße Gießschlackenzusammensetzung für Stähle mit einer niedrigen Liquidustemperatur die folgenden Komponenten:
33-48 Gew.-%
23-43 Gew.-% Al₂O₃;
12,5-15 Gew.-% F⁻ (Fluor-Ionen);
3-5 Gew.-% SiO_{2;}
11-15 Gew.-% Na₂O;
3-5 Gew.-% Li₂O;
≤ 3 Gew.-% TiO₂.
≤ 1,5 Gew.-% MgO;
≤ 1 Gew.-% MnO;
≤ 1 Gew.-% FeO.

Die zugehörige bevorzugte Gießpulverzusammensetzung, berechnet ohne flüchtige Komponenten, umfasst:
40-60 Gew.-% vorgeschmolzenes Kalziumaluminat;
15-30 Gew.-% fluoridhaltige Komponente, vorzugsweise in Form von CaF₂;
3-5 Gew.-% SiO₂;
11-15 Gew.-% Na₂O;
3-5 Gew.-% Li₂O;
≤ 10 Gew.-% Al₂O₃;
≤ 15 Gew.-% Kohlenstoff;
≤ 3,0 Gew.-% TiO₂;
≤ 1,5 Gew.-% MgO;
≤ 1,0 Gew.-% MnO;
≤ 1,0 Gew.-% Fe₂O₃;
≤ 1,0 Gew.-% FeO.

Eine weitere wichtige Eigenschaft der Gießschlacken ist deren Wärmeleitfähigkeit. Diese bestimmt im Gießspalt die Wärmeübertragung vom Stahl zur Kokille. Die Wärmeleitfähigkeit wird vornehmlich durch das Kristallisationsverhalten der Gießschlacken beeinflusst. Hier ist von Bedeutung, ob die Gießschlacke amorph oder kristallin erstarrt. Typische Gießschlacken auf Kalziumsilikatbasis erstarren hauptsächlich amorph oder bilden beim schnellen Abkühlen amorphe und kristalline Bestandteile. Der amorphe Anteil der Gießschlacken ist vorteilhaft für die Schmiereigenschaften und gewährleistet eine stärkere Wärmeübertragung.
Beim Gießen von peritektisch erstarrenden Stählen ist zur Vermeidung von Längsrissen eine geringere Wärmeübertragung erwünscht. Dies kann unter anderem durch Gießschlacken mit einem höheren kristallinen Anteil erzielt werden, wenn das amorphe/kristalline Verhältnis und die damit verbundene Wärmeleitfähigkeit der Gießschlacken an die Stahlgüte angepasst wird. Die Anpassung ist wiederum durch der Gehalt der Flussmittel (Na₂O, Li₂O, F⁻) möglich. Der höhere Anteil der Flussmittel führt gleichzeitig zu höheren amorphen Anteilen in der Gießschlacke.

Eine Zugabe von höchstens 6,5 Gew.-% SiO₂ vermeidet einen zu hohen amorphen Anteil in der Gießschlacke.

In bevorzugten Ausführungsformen der vorliegenden Erfindung beträgt in den vorstehend genannten Zusammensetzungen daher der Gehalt an Komponente SiO₂ ≤ 6 Gew.-%, vorzugsweise ≤ 5,5 Gew.-%, besonders bevorzugt ≤ 5 Gew.-%.

Die Zuführung eines geringeren TiO₂-Gehaltes erlaubt eine weitere Reduzierung des SiO₂-Gehaltes in den vorstehend genannten Gießpulverzusammensetzungen. TiO₂ begünstigt ebenfalls die Bildung des amorphen Anteils der Gießschlacken und ist zudem thermodynamisch stabiler als SiO₂ gegenüber der Reaktion mit dem im Stahl vorhandenen Al. Die Viskosität der Gießschlacken beim Reduzieren von SiO₂ und gleichzeitiger Zugabe von TiO₂ bleibt unverändert (Fig.3).

In einem weiteren Aspekt betrifft die vorliegende Erfindung daher eine Gießschlackenzusammensetzung, welche die folgenden Komponenten aufweist:
30-50 Gew.-%
20-45 Gew.-% Al₂O₃;
8-15 Gew.-% F⁻(Fluor-Ionen);
3-5 Gew.-% SiO_{2;}
5-15 Gew.-% Na₂O;
2-5 Gew.-% Li₂O;
1,5-5 Gew.-% TiO₂;
≤ 5 Gew.-% MgO;
≤ 3 Gew.-% MnO;
≤ 2 Gew.-% FeO.

Das zugehörige Gießpulver weist eine Zusammensetzung auf, die berechnet ohne flüchtige Bestandteile folgende Komponenten umfasst:
40-60 Gew.-% vorgeschmolzenes Kalziumaluminat;
10-30 Gew.-% fluoridhaltige Komponente, vorzugsweise in Form von CaF₂;
3-5 Gew.-% SiO₂;
5-15 Gew.-% Na₂O;
2-5 Gew.-% Li₂O;
≤ 10 Gew.-% Al₂O₃;
≤ 15 Gew.-% Kohlenstoff;
1,5-5 Gew.-% TiO₂;
≤ 5 Gew.-% MgO;
≤ 3 Gew.-% MnO;
≤ 1 Gew.-% Fe₂O₃;
≤ 1 Gew.-% FeO.

In einer bevorzugten Ausführungsform umfasst die erfindungsgemäße Gießschlackenzusammensetzung die folgenden Komponenten:
33-48 Gew.-%
23-43 Gew.-% Al₂O₃;
8-13 Gew.-% F⁻(Fluor-Ionen);
3-4 Gew.-% SiO_{2;}
8-13 Gew.-% Na₂O;
3-5 Gew.-% Li₂O;
1,5-3 Gew.-% TiO₂.
≤ 1,5 Gew.-% MgO;
≤ 1 Gew.-% MnO;
≤ 1 Gew.-% FeO.

Das zugehörige bevorzugte Gießpulver weist eine Zusammensetzung auf, die berechnet ohne flüchtige Bestandteile folgende Komponenten umfasst:
50-60 Gew.-% vorgeschmolzenes Kalziumaluminat;
15-25 Gew.-% fluoridhaltige Komponente, vorzugsweise in Form von CaF₂;
3-4 Gew.-% SiO₂;
8-13 Gew.-% Na₂O;
3-5 Gew.-% Li₂O;
≤ 10 Gew.-% Al₂O₃;
≤ 15 Gew.-% Kohlenstoff;
1,5-3 Gew.-% TiO₂;
≤ 1,5 Gew.-% MgO;
≤ 1,0 Gew.-% MnO;
≤ 1 Gew.-% Fe₂O₃;
≤ 1 Gew.-% FeO.

Die erfindungsgemäßen Gießschlacken zeichnen sich insbesondere dadurch aus, dass sie keine oder nur eine sehr geringe Reaktivität gegenüber einem Aluminiumanteil in Stählen zeigen, so dass das Spektrum vergießbarer Stahlsorten erweitert wird und auch Stähle mit einem hohen Anteil an Aluminium bzw. einem hohem Anteil an Aluminium und Mangan zuverlässig hergestellt werden können. Dies führt letztlich auch zu einer Verbesserung der Qualität der unter Verwendung dieser Gießpulver erhaltenen Stahlprodukte.

Ein weiterer Aspekt der vorliegenden Erfindung betrifft ein Verfahren für das Gießen von Stahl unter Verwendung eines Gießpulvers wie vorstehend beschrieben.

Alle bevorzugten Ausführungsformen, welche vorstehend im Zusammenhang mit dem erfindungsgemäßen Gießpulver beschrieben wurden, gelten entsprechend auch für das erfindungsgemäße Verfahren für das Gießen von Stahl und werden daher an dieser Stelle nicht wiederholt.

Vorzugsweise erfolgt das Verfahren zum Gießen von Stahl nach einem kontinuierlichen Prozess, insbesondere nach einem Stranggießverfahren.

In einer bevorzugten Ausführungsform betrifft die vorliegende Erfindung ein erfindungsgemäßes Verfahren für das Gießen von Stahl mit einem Aluminiumgehalt von ≥ 1 Gew.-%, vorzugsweise von ≥ 1,5 Gew.-%, besonders bevorzugt ≥ 3,0 Gew.-%, ganz besonders bevorzugt ≥ 5,0 Gew.-%.

In einer weiteren bevorzugten Ausführungsform betrifft die vorliegende Erfindung ein erfindungsgemäßes Verfahren für das Gießen von Stahl mit einem Mangangehalt von ≥ 15 Gew.-%, vorzugsweise ≥ 17,5 Gew.-%, besonders bevorzugt ≥ 20 Gew.-%.

In einer weiteren bevorzugten Ausführungsform betrifft die vorliegende Erfindung ein erfindungsgemäßes Verfahren für das Gießen von Stahl mit einem Titangehalt von ≥ 0,2 Gew.-%, vorzugsweise ≥ 0,5 Gew.-%.

In einer bevorzugten Ausführungsform betrifft die vorliegende Erfindung ein erfindungsgemäßes Verfahren für das Gießen von Stahl mit einem Aluminiumgehalt von ≥ 1 Gew.-%, vorzugsweise von ≥ 1,5 Gew.-%, besonders bevorzugt ≥ 3,0 Gew.-%, ganz besonders bevorzugt ≥ 5,0 Gew.-% und ggf. einem Mangangehalt von ≥ 15 Gew.-%, vorzugsweise ≥ 17,5 Gew.-%, besonders bevorzugt ≥ 20 Gew.-% und ggf. einem Titangehalt von ≥ 0,2 Gew.-%, vorzugsweise ≥ 0,5 Gew.-%.

### Kurze Beschreibung der Zeichnungen

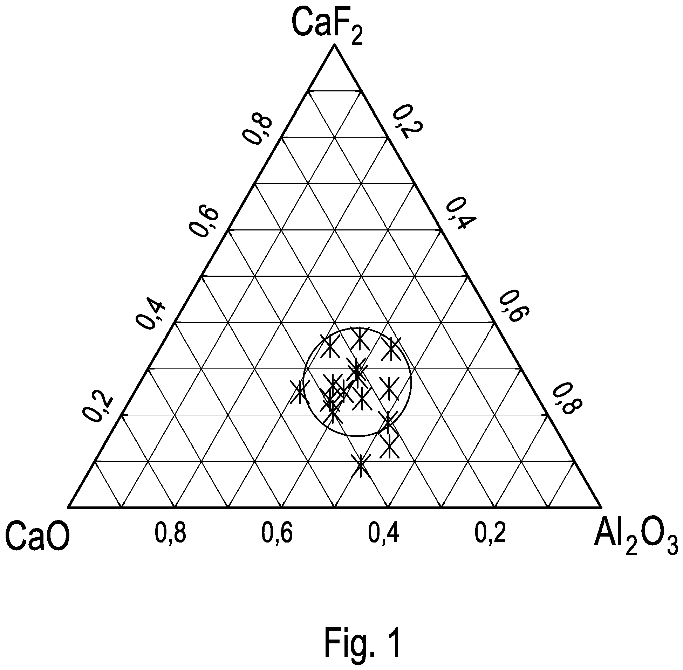

**Figur 1** zeigt vorteilhafte Zusammensetzungen der Komponenten CaO, Al₂O₃ und CaF₂.
**Figur 2** zeigt die mit einem Hochtemperatur-Rotationsviskosimeter der Fa. Bähr gemessene Viskosität einiger Gießschlacken in Abhängigkeit von der Temperatur für verschiedene Flussmittelgehalte.
**Figur 3** zeigt die gemessene Viskosität einiger Gießschlacken bei Reduzierung des SiO₂-Anteils und Erhöhung des TiO₂-Anteils (Pr.9 und Pr.25 mit ca. 5 Gew.-% SiO₂; Pr.42 und Pr.44 mit ca. 4 Gew.-% SiO₂ und ca. 2 Gew-% TiO₂).

Im Folgenden wird die Erfindung anhand von Beispielen erläutert. Diese Erläuterungen sind lediglich beispielhaft und schränken den allgemeinen Erfindungsgedanken nicht ein.

### Beispiel

Verschiedene Gießpulver der in der Tabelle 1 angegebenen Zusammensetzungen wurden untersucht. Die C-haltigen Proben Nr. 5, 19, 32, 40 und 44 wurden 8 Stunden bei 600 °C vorgeglüht und unter Argonatmosphäre bei 1500 °C aufgeschmolzen. Die C-freien Proben wurden nicht vorgeglüht, sondern direkt unter Argonatmosphäre bei 1500 °C aufgeschmolzen. Nach dem Aufschmelzen wurden die Proben jeweils 15 Minuten bei 1500 °C gehalten und anschließend auf ein Stahlsubstrat, welches Raumtemperatur hatte, zum Abkühlen in Luft bei Raumtemperatur abgegossen. Die abgekühlten Proben wiesen über die Probenfläche unterschiedliche Dicken von bis zu 15 mm auf. Für die nachfolgenden Untersuchungen wurden Stellen ausgewählt, an denen die erstarrte Schlackenschicht 5 bis 7 mm dick war. An diesen Stellen wurde der amorph bzw. kristallin erstarrte Anteil im Probenquerschnitt mit Hilfe eines Lichtmikroskops bestimmt.

In Tabelle 2 werden die chemischen Zusammensetzungen sowie der amorphe Anteil der resultierenden Schlacken angegeben. Die chemische Zusammensetzung der Gießpulver sowie der Gießschlacken wurden an Proben mittels Röntgenfluoreszenzmethode jeweils dreifach bestimmt. Der Gehalt der Fluor-Ionen wurde durch eine Hydropyrolyse nach DIN 51723 und DIN 51727 mit anschließender Ionenchromatographie nach DIN EN ISO 10304 bestimmt. Die Na₂O-Konzentration wurde nach einer entsprechenden Probenaufbereitung mittels einer ICPOS-Messung nach DIN EN ISO 11885 ermittelt.

Des Weiteren wurden Gießpulverproben mit der Zusammensetzung der Proben 31, 40 und 48 mit ausgewählten Schmelzen in Kontakt gebracht und bei 1450 °C - 1550°C für 15 Minuten unter Argonatmosphäre gehalten (vgl. Tabelle 3). Anschließend wurden Schlacke und Schmelze getrennt abgegossen und jeweils analysiert. Die dazugehörigen Liquidustemperaturen wurden mittels Differentialthermoanalyse (DTA) bestimmt. Die sich einstellenden Gießschlackenzusammensetzungen und der Anteil amorpher Gießschlacke sind identisch mit den Ergebnissen der Proben 31, 40 und 48 in Tabelle 2. Somit konnte nachgewiesen werden, dass die vorher untersuchten Gießschlackensysteme auch bei Kontakt mit Stahlschmelzen repräsentativ sind.

Die in der Tabelle 1 angegebenen erfindungsgemäßen Gießpulverzusammensetzungen eignen sich somit in ausgezeichneter Weise zur Herstellung der angestrebten Gießschlacken.

**Tabelle 1: Zusammensetzung der Gießpulver in Gew.-%, ohne flüchtige Bestandteile, und Verhältnis von CaO zu Al₂O₃ im vorgeschmolzenen Kalziumaluminat (dimensionslos)**

| **Pro be** | **vorge schmol zenes Kalzium aluminat** | **CaF₂** | **Na₂O** | **Li₂O** | **Al₂O₃** | **SiO₂** | **TiO₂** | **C** | **CaO/Al₂O₃ im vorge schmolze nen Kalzi umalumi nat** |
|---|---|---|---|---|---|---|---|---|---|
| Pr.4 | 47,3 | 28,7 | 10,6 | 5,0 | 2,6 | 5,6 | 0,0 | 0,0 | 0,80 |
| Pr.5 | 41,1 | 29,2 | 10,8 | 5,1 | 0,0 | 5,7 | 0,0 | 8,0 | 1,00 |
| Pr.9 | 42,1 | 29,1 | 10,8 | 2,5 | 9,7 | 5,7 | 0,0 | 0,0 | 0,90 |
| Pr.10 | 45,6 | 23,5 | 10,3 | 4,9 | 10,2 | 5,5 | 0,0 | 0,0 | 0,90 |
| Pr.17 | 57,6 | 21,2 | 10,6 | 2,5 | 2,6 | 5,6 | 0,0 | 0,0 | 1,00 |
| Pr.18 | 51,1 | 21,2 | 10,6 | 2,5 | 9,0 | 5,6 | 0,0 | 0,0 | 0,90 |
| Pr.19 | 47,1 | 19,8 | 9,9 | 2,3 | 9,1 | 5,2 | 0,0 | 6,7 | 0,80 |
| Pr.23 | 55,9 | 25,7 | 10,7 | 2,5 | 0,0 | 5,2 | 0,0 | 0,0 | 0,67 |
| Pr.25 | 57,1 | 21,4 | 10,7 | 2,5 | 3,1 | 5,1 | 0,0 | 0,0 | 1,00 |
| Pr.26 | 64,3 | 11,2 | 11,7 | 2,7 | 10,0 | 0,0 | 0,0 | 0,0 | 0,90 |
| Pr.28 | 55,9 | 20,9 | 10,4 | 4,7 | 3,1 | 5,0 | 0,0 | 0,0 | 1,00 |
| Pr.31 | 56,8 | 21,0 | 10,5 | 3,5 | 2,8 | 5,4 | 0,0 | 0,0 | 1,00 |
| Pr.32 | 50,9 | 19,8 | 9,9 | 3,3 | 5,0 | 5,0 | 0,0 | 6,1 | 1,00 |
| Pr.33 | 56,1 | 20,8 | 10,4 | 4,7 | 2,7 | 5,3 | 0,0 | 0,0 | 1,00 |
| Pr.34 | 55,5 | 22,2 | 10,5 | 3,5 | 2,8 | 5,4 | 0,0 | 0,0 | 1,00 |
| Pr.35 | 54,1 | 21,7 | 10,2 | 3,5 | 5,2 | 5,2 | 0,0 | 0,0 | 1,00 |
| Pr.36 | 50,4 | 21,0 | 10,5 | 3,5 | 9,1 | 5,4 | 0,0 | 0,0 | 0,90 |
| Pr.39 | 53,5 | 20,8 | 10,4 | 4,7 | 5,3 | 5,3 | 0,0 | 0,0 | 1,00 |
| Pr.40 | 50,3 | 20,1 | 9,5 | 3,2 | 4,9 | 4,9 | 0,0 | 7,1 | 1,00 |
| Pr.41 | 51,0 | 20,8 | 10,4 | 4,7 | 7,9 | 5,3 | 0,0 | 0,0 | 1,00 |
| Pr.42 | 57,1 | 21,4 | 10,7 | 2,5 | 3,1 | 3,3 | 1,8 | 0,0 | 1,00 |
| Pr.43 | 55,7 | 20,9 | 10,4 | 5,0 | 3,1 | 3,3 | 1,7 | 0,0 | 1,00 |
| Pr.44 | 50,2 | 19,5 | 9,7 | 4,7 | 5,0 | 3,3 | 1,6 | 6,0 | 1,00 |
| Pr.49 | 56,8 | 21,3 | 10,6 | 3,6 | 3,1 | 3,3 | 1,3 | 0,0 | 1,00 |
| Pr.50 | 53,7 | 20,9 | 10,4 | 3,5 | 5,3 | 3,6 | 2,6 | 0,0 | 1,00 |
| Pr.51 | 58,3 | 9,0 | 10,5 | 2,4 | 9,2 | 5,6 | 0,0 | 5,0 | 0,80 |
| Pr.52 | 59,7 | 7,5 | 10,8 | 2,5 | 9,7 | 5,7 | 0,0 | 4,0 | 0,80 |
| Pr.53 | 51,1 | 31,0 | 10,4 | 2,4 | 0,0 | 5,0 | 0,0 | 0,0 | 1,00 |

**Tabelle 2: Zusammensetzung der Laborschlacken in Gew.-% (normiert) sowie amorph erstarrter Anteil**

| **Probe** | **CaO** | **Al₂O₃** | **SiO₂** | **F⁻** | **Na₂O** | **Li₂O** | **MgO** | **FeO** | **MnO** | **TiO₂** | **amorpher Anteil, %** |
|---|---|---|---|---|---|---|---|---|---|---|---|
| Pr.4 | 38,98 | 26,37 | 5,64 | 12,87 | 10,30 | 4,81 | 0,68 | 0,30 | 0,02 | 0,03 | 85 |
| Pr.5 | 43,00 | 23,58 | 5,76 | 12,47 | 9,18 | 4,83 | 0,74 | 0,39 | 0,02 | 0,04 | 85 |
| Pr.9 | 39,19 | 30,27 | 5,36 | 10,44 | 10,84 | 2,52 | 0,72 | 0,21 | 0,02 | 0,03 | 90 |
| Pr.10 | 34,78 | 31,21 | 5,44 | 12,20 | 11,12 | 4,54 | 0,52 | 0,15 | 0,01 | 0,03 | 90 |
| Pr.17 | 42,43 | 27,41 | 6,27 | 9,91 | 10,21 | 2,73 | 0,69 | 0,29 | 0,02 | 0,04 | 85 |
| Pr.18 | 38,50 | 33,03 | 5,68 | 8,72 | 10,68 | 2,44 | 0,64 | 0,24 | 0,02 | 0,04 | 60 |
| Pr.19 | 35,14 | 35,73 | 5,66 | 9,55 | 10,59 | 2,47 | 0,56 | 0,24 | 0,01 | 0,03 | 60 |
| Pr.23 | 40,54 | 29,75 | 5,29 | 11,25 | 9,99 | 2,29 | 0,63 | 0,22 | 0,01 | 0,03 | 70 |
| Pr.25 | 43,63 | 29,32 | 5,39 | 8,92 | 9,25 | 2,34 | 0,79 | 0,30 | 0,02 | 0,04 | 90 |
| Pr.26 | 40,82 | 42,80 | 0,70 | 3,89 | 7,81 | 2,75 | 0,84 | 0,33 | 0,01 | 0,05 | 45 |
| Pr.28 | 42,91 | 29,45 | 5,19 | 8,51 | 8,23 | 4,65 | 0,73 | 0,27 | 0,01 | 0,04 | 95 |
| Pr.31 | 42,36 | 28,47 | 5,95 | 8,89 | 9,36 | 3,35 | 0,72 | 0,83 | 0,02 | 0,06 | 80 |
| Pr.32 | 41,37 | 29,53 | 5,70 | 9,25 | 9,49 | 3,62 | 0,67 | 0,30 | 0,02 | 0,05 | 70 |
| Pr.33 | 42,36 | 28,40 | 5,76 | 9,16 | 9,04 | 4,23 | 0,68 | 0,29 | 0,02 | 0,07 | 85 |
| Pr.34 | 42,78 | 27,74 | 5,72 | 9,97 | 9,44 | 3,34 | 0,66 | 0,28 | 0,02 | 0,05 | 70 |
| Pr.35 | 41,66 | 29,27 | 5,55 | 9,73 | 9,56 | 3,22 | 0,66 | 0,25 | 0,03 | 0,06 | 70 |
| Pr.36 | 38,33 | 32,55 | 5,61 | 8,89 | 10,50 | 3,24 | 0,58 | 0,23 | 0,02 | 0,06 | 65 |
| Pr.39 | 41,84 | 29,79 | 5,70 | 7,93 | 9,31 | 4,41 | 0,65 | 0,26 | 0,02 | 0,08 | 95 |
| Pr.40 | 42,02 | 29,17 | 5,46 | 9,78 | 9,31 | 3,26 | 0,66 | 0,25 | 0,03 | 0,07 | 85 |
| Pr.41 | 40,12 | 30,45 | 5,52 | 9,04 | 9,47 | 4,45 | 0,63 | 0,23 | 0,02 | 0,07 | 95 |
| Pr.42 | 42,75 | 29,12 | 3,85 | 9,50 | 9,54 | 2,43 | 0,78 | 0,30 | 0,01 | 1,71 | 70 |
| Pr.43 | 42,76 | 29,17 | 3,72 | 8,73 | 7,98 | 4,73 | 0,88 | 0,31 | 0,01 | 1,71 | 80 |
| Pr.44 | 41,30 | 29,68 | 3,94 | 8,96 | 8,30 | 4,98 | 0,75 | 0,32 | 0,01 | 1,75 | 95 |
| Pr.49 | 42,42 | 28,34 | 3,94 | 9,22 | 9,84 | 3,54 | 0,71 | 0,49 | 0,02 | 1,48 | 80 |
| Pr.50 | 41,37 | 29,51 | 3,86 | 9,17 | 8,97 | 3,28 | 0,64 | 0,29 | 0,02 | 2,89 | 70 |
| Pr.51 | 34,10 | 38,17 | 5,55 | 6,84 | 11,46 | 2,39 | 1,14 | 0,29 | 0,02 | 0,04 | 45 |
| Pr.52 | 33,63 | 40,89 | 6,04 | 5,05 | 10,53 | 2,75 | 0,78 | 0,28 | 0,02 | 0,04 | 10 |
| Pr.53 | 50,82 | 21,55 | 5,71 | 9,45 | 8,85 | 2,32 | 0,81 | 0,42 | 0,04 | 0,05 | 20 |

In der Schlackenprobe 26 sind 0,7 Gew.-% Siliziumdioxid zu finden, obwohl der dazugehörigen Gießpulverprobe aktiv kein Siliziumdioxid zugegeben wurde. Ursache hierfür ist, dass sich im eingesetzten Feuerfestmaterial von Schmelzofen und Tiegel geringe Menge an Siliziumdioxid befanden, die während des Versuches in die aufgeschmolzene Gießschlacke eindiffundieren konnten.

**Tabelle 3: Beispiele für eingesetzte Stahlschmelzen innerhalb eines Kontaktversuches (Stähle auf Basis von Eisen sowie die wichtigsten Legierungselemente in Gew.-%, Liquidustemperatur T_{liq} in °C,):**

| Stahlsorte | T_{liq.} | C | Mn | Al | Ti | Zusammensetzung der Laborschlacke |
|---|---|---|---|---|---|---|
| Stahl 1 | 1502 | 0,22 | 1,67 | 1,46 | - | Pr. 40 (Tabelle 2) |
| Stahl 2 | 1420 | 0,40 | 18,80 | 1,20 | - | Pr. 31 (Tabelle 2) |
| Stahl 3 | 1516 | 0,05 | - | 5,00 | 0,5 | Pr. 48 (Tabelle 2) |

## Patentansprüche

1. Gießpulver umfassend die Komponenten, ohne flüchtige Bestandteile:
40-60 Gew.-% vorgeschmolzenes Kalziumaluminat;
10-30 Gew.-% fluoridhaltige Komponente;
3-6,5 Gew.-% SiO₂;
5-15 Gew.-% Na₂O;
2-5,5 Gew.-% Li₂O;
≤ 10,5 Gew.-% Al₂O₃;
≤ 15 Gew.-% Kohlenstoff,
wobei das Verhältnis von CaO zu Al₂O₃ im vorgeschmolzenen Kalziumaluminat im Bereich von 0,6 bis 1,1 liegt.

2. Gießpulver gemäß Anspruch 1 umfassend eine oder mehrere der folgenden Komponenten:
≤ 5,0 Gew.-% TiO₂;
≤ 5,0 Gew.-% MgO.
≤ 3,0 Gew.-% MnO;
≤ 1,0 Gew.-% Fe₂O₃;
≤ 1,0 Gew.-% FeO.

3. Gießpulver, gemäß Anspruch 1 oder 2 umfassend die Komponenten
40-60 Gew.-% vorgeschmolzenes Kalziumaluminat;
15-25 Gew.-% fluoridhaltige Komponente;
3-6 Gew.-% SiO₂;
7-12 Gew.-% Na₂O;
2-5,5 Gew.-% Li₂O;
≤ 10 Gew.-% Al₂O₃;
≤ 15 Gew.-% Kohlenstoff;
≤ 3,0 Gew.-% TiO₂;
≤ 1,0 Gew.-% MgO;
≤ 1,0 Gew.-% MnO;
≤ 1,0 Gew.-% Fe₂O₃;
≤ 1,0 Gew.-% FeO.

4. Gießpulver gemäß einem der Ansprüche 1-3, wobei die fluoridhaltige Komponente CaF₂ ist.

5. Gießpulver gemäß einem der Ansprüche 1-4, wobei der Gehalt an SiO₂ ≤ 6 Gew.-% beträgt.

6. Gießpulver gemäß einem der Ansprüche 1-5, wobei der Gehalt an TiO₂ 1,5-3 Gew.-% beträgt.

7. Gießpulver gemäß einem der Ansprüche 1-6, wobei der Gehalt an SiO₂ 3-5 Gew.-% und der Gehalt an TiO₂ 1,5-3 Gew.-% beträgt.

8. Gießschlacke, die aus einem Gießpulver gemäß Anspruch 1 resultiert, umfassend die Komponenten:
30-50 Gew.-%
20-45 Gew.-% Al₂O₃;
7-15 Gew.-% F⁻(Fluor-Ionen);
3-6,5 Gew.-% SiO₂;
5-15 Gew.-% Na₂O;
2-5% Li₂O.

9. Gießschlacke gemäß Anspruch 8 umfassend eine oder mehrere der folgenden Komponenten:
≤ 5,0 Gew.-% TiO₂;
≤ 5,0 Gew.-% MgO;
≤ 3,0 Gew.-% MnO;
≤ 2,0 Gew.-% FeO.

10. Gießschlacke gemäß einem der Ansprüche 8 oder 9 umfassend die Komponenten:
33-48 Gew.-%
23-43 Gew.-% Al₂O₃;
8-13 Gew.-% F⁻(Fluor-Ionen);
3-6,5 Gew.-% SiO₂;
7-12 Gew.-% Na₂O;
2-5 Gew.-% Li₂O;
≤ 3 Gew.-% TiO₂.
≤ 1,5 Gew.-% MgO;
≤ 1,0 Gew.-% MnO;
≤ 1 Gew.-% FeO.

11. Gießschlacke gemäß einem der Ansprüche 8-10, wobei der Fluor-Ionen Gehalt mittels CaF₂ eingestellt wird.

12. Gießschlacke gemäß einem der Ansprüche 8-11, wobei der Gehalt an SiO₂ ≤ 6 Gew.-% beträgt.

13. Gießschlacke gemäß einem der Ansprüche 8-12, wobei der Gehalt an TiO₂ 1,5-3 Gew.-% beträgt.

14. Gießschlacke gemäß einem der Ansprüche 8-13, wobei der Gehalt an SiO₂ 3-5 Gew.-% und der Gehalt an TiO₂ 1,5-3 Gew.-% beträgt.

15. Verfahren für das Gießen von Stahl, wobei ein Gießpulver gemäß einem der Ansprüche 1-7 oder eine Gießschlacke gemäß einem der Ansprüche 8-14 verwendet wird.

16. Verfahren gemäß Anspruch 15, wobei das Verfahren ein Verfahren zum Stranggießen ist.

17. Verfahren gemäß Anspruch 15 oder 16 für das Gießen von Stahl mit einem Aluminiumgehalt von ≥ 1 Gew.-%.

18. Verfahren gemäß einem der Ansprüche 15-17 für das Gießen von Stahl mit einem Mangangehalt von ≥ 15 Gew.-%.

19. Verfahren gemäß einem der Ansprüche 15-18 für das Gießen von Stahl mit einem Titangehalt von ≥ 0,2 Gew.-%.

20. Verfahren gemäß Anspruch 19 für das Gießen von Stahl mit einem Aluminiumgehalt von ≥ 1 Gew.-%

## Claims

1. Casting powder comprising the following components, excluding volatile constituents:
40-60 wt% prefused calcium aluminate;
10-30 wt% fluoride-containing component;
3-6.5 wt% SiO₂;
5-15 wt% Na₂O;
2-5.5 wt% Li₂O;
≤ 10.5 wt% Al₂O₃;
≤ 15 wt% carbon,
the ratio of CaO to Al₂O₃ in the prefused calcium aluminate being in the range from 0.6 to 1.1.

2. Casting powder according to Claim 1, comprising one or more of the following components:
≤ 5.0 wt% TiO₂;
≤ 5.0 wt% MgO;
≤ 3.0 wt% MnO;
≤ 1.0 wt% Fe₂O₃;
≤ 1.0 wt% FeO.

3. Casting powder according to Claim 1 or 2, comprising the following components:
40-60 wt% prefused calcium aluminate;
15-25 wt% fluoride-containing component;
3-6 wt% Si0₂;
7-12 wt% Na₂O;
2-5.5 wt% Li₂O;
≤ 10 wt% Al₂O₃;
≤ 15 wt% carbon;
≤ 3.0 wt% TiO₂;
≤ 1.0 wt% MgO;
≤ 1.0 wt% MnO;
≤ 1.0 wt% Fe₂O₃;
≤ 1.0 wt% FeO.

4. Casting powder according to any of Claims 1-3, the fluoride-containing component being CaF₂.

5. Casting powder according to any of Claims 1-4, the SiO₂ content being ≤ 6 wt%.

6. Casting powder according to any of Claims 1-5, the TiO₂ content being 1.5-3 wt%.

7. Casting powder according to any of Claims 1-6, the SiO₂ content being 3-5 wt% and the TiO₂ content being 1.5-3 wt%.

8. Casting slag resulting from a casting powder according to Claim 1, comprising the following components:
30-50 wt% CaO;
20-45 wt% Al₂O₃;
7-15 wt% F⁻(fluorine ions);
3-6.5 wt% Si0₂;
5-15 wt% Na₂O;
2-5% Li₂O.

9. Casting slag according to Claim 8, comprising one or more of the following components:
≤ 5.0 wt% TiO₂;
≤ 5.0 wt% MgO;
≤ 3.0 wt% MnO;
≤ 2.0 wt% FeO.

10. Casting slag according to either of Claims 8 and 9, comprising the following components:
33-48 wt% CaO;
23-43 wt% Al₂O₃;
8-13 wt% F⁻(fluorine ions);
3-6.5 wt% Si0₂;
7-12 wt% Na₂O;
2-5 wt% Li₂O;
≤ 3 wt% TiO₂;
≤ 1.5 wt% MgO;
≤ 1.0 wt% MnO;
≤ 1 wt% FeO.

11. Casting slag according to any of Claims 8-10, the fluorine ion content being adjusted by means of CaF₂.

12. Casting slag according to any of Claims 8-11, the SiO₂ content being ≤ 6 wt%.

13. Casting slag according to any of Claims 8-12, the TiO₂ content being 1.5-3 wt%.

14. Casting slag according to any of Claims 8-13, the SiO₂ content being 3-5 wt% and the TiO₂ content being 1.5-3 wt%.

15. Method for the casting of steel, using a casting powder according to any of Claims 1-7 or a casting slag according to any of Claims 8-14.

16. Method according to Claim 15, the method being a method for continuous casting.

17. Method according to Claim 15 or 16 for the casting of steel having an aluminium content of ≥ 1 wt%.

18. Method according to any of Claims 15-17 for the casting of steel having a manganese content of ≥ 15 wt%.

19. Method according to any of Claims 15-18 for the casting of steel having a titanium content of ≥ 0.2 wt%.

20. Method according to Claim 19 for the casting of steel having an aluminium content of ≥ 1 wt%.

## Revendications

1. Poudre de coulée comprenant les composants suivants, sans constituants volatils :
40 à 60 % en poids d'aluminate de calcium pré-fondu,
10 à 30 % en poids d'un composant contenant un fluorure,
3 à 6,5 % en poids de SiO₂,
5 à 15 % en poids de Na₂O,
2 à 5,5 % en poids de Li₂O,
≤ 10,5 % en poids d'Al₂O₃,
≤ 15 % en poids de carbone,
le rapport entre CaO et Al₂O₃ dans l'aluminate de calcium pré-fondu se situant dans la plage allant de 0,6 à 1,1.

2. Poudre de coulée selon la revendication 1, comprenant un ou plusieurs des composants suivants :
≤ 5,0 % en poids de TiO₂,
≤ 5,0 % en poids de MgO,
≤ 3,0 % en poids de MnO,
≤ 1,0 % en poids de Fe₂O₃,
≤ 1,0 % en poids de FeO.

3. Poudre de coulée selon la revendication 1 ou 2, comprenant les composants suivants :
40 à 60 % en poids d'aluminate de calcium pré-fondu,
15 à 25 % en poids d'un composant contenant un fluorure,
3 à 6 % en poids de SiO₂,
7 à 12 % en poids de Na₂O,
2 à 5,5 % en poids de Li₂O,
≤ 10 % en poids d'Al₂O₃,
≤ 15 % en poids de carbone,
≤ 3,0 % en poids de TiO₂,
≤ 1,0 % en poids de MgO,
≤ 1,0 % en poids de MnO,
1,0 % en poids de Fe₂O₃,
≤ 1,0 % en poids de FeO.

4. Poudre de coulée selon l'une quelconque des revendications 1 à 3, dans laquelle le composant contenant un fluorure est CaF₂.

5. Poudre de coulée selon l'une quelconque des revendications 1 à 4, dans laquelle la teneur en SiO₂ est ≤ 6 % en poids.

6. Poudre de coulée selon l'une quelconque des revendications 1 à 5, dans laquelle la teneur en TiO₂ est de 1,5 à 3 % en poids.

7. Poudre de coulée selon l'une quelconque des revendications 1 à 6, dans laquelle la teneur en SiO₂ est de 3 à 5 % en poids et la teneur en TiO₂ est de 1,5 à 3 % en poids.

8. Scorie de coulée, qui résulte d'une poudre de coulée selon la revendication 1, comprenant les composants suivants :
30 à 50 % en poids de CaO,
20 à 45 % en poids d'Al₂O₃,
7 à 15 % en poids de F⁻ (ions fluor),
3 à 6,5 % en poids de SiO₂,
5 à 15 % en poids de Na₂O,
2 à 5 % en poids de Li₂O.

9. Scorie de coulée selon la revendication 8, comprenant un ou plusieurs des composants suivants :
≤ 5,0 % en poids de TiO₂,
≤ 5,0 % en poids de MgO,
≤ 3,0 % en poids de MnO,
≤ 2,0 % en poids de FeO.

10. Scorie de coulée selon l'une quelconque des revendications 8 ou 9, comprenant les composants suivants :
33 à 48 % en poids de CaO,
23 à 43 % en poids d'Al₂O₃,
8 à 13 % en poids de F⁻ (ions fluor),
3 à 6,5 % en poids de SiO₂,
7 à 12 % en poids de Na₂O,
2 à 5 % en poids de Li₂O,
≤ 3 % en poids de TiO₂,
≤ 1,5 % en poids de MgO,
≤ 1,0 % en poids de MnO,
≤ 1 % en poids de FeO.

11. Scorie de coulée selon l'une quelconque des revendications 8 à 10, dans laquelle la teneur en ions fluor est ajustée au moyen de CaF₂.

12. Scorie de coulée selon l'une quelconque des revendications 8 à 11, dans laquelle la teneur en SiO₂ est ≤ 6 % en poids.

13. Scorie de coulée selon l'une quelconque des revendications 8 à 12, dans laquelle la teneur en TiO₂ est de 1,5 à 3 % en poids.

14. Scorie de coulée selon l'une quelconque des revendications 8 à 13, dans laquelle la teneur en SiO₂ est de 3 à 5 % en poids et la teneur en TiO₂ est de 1,5 à 3 % en poids.

15. Procédé pour la coulée d'acier, dans lequel une poudre de coulée selon l'une quelconque des revendications 1 à 7 ou une scorie de coulée selon l'une quelconque des revendications 8 à 14 est utilisée.

16. Procédé selon la revendication 15, dans lequel le procédé est un procédé de coulée continue.

17. Procédé selon la revendication 15 ou 16, pour la coulée d'acier ayant une teneur en aluminium ≥ 1 % en poids.

18. Procédé selon l'une quelconque des revendications 15 à 17 pour la coulée d'acier ayant une teneur en manganèse ≥ 15 % en poids.

19. Procédé selon l'une quelconque des revendications 15 à 18 pour la coulée d'acier ayant une teneur en titane ≥ 0,2 % en poids.

20. Procédé selon la revendication 19 pour la coulée d'acier ayant une teneur en aluminium ≥ 1 % en poids.
